# EUROPÄISCHE PATENTSCHRIFT

(11) **EP 0 934 620 B1**
(45) Veröffentlichungstag und Bekanntmachung des Hinweises auf die Patenterteilung: **10.10.2001**
(21) Anmeldenummer: 97938907.9
(22) Anmeldetag: 14.08.1997
(51) Int. Cl.: H02K 24/00, H02K 15/08, H02K 15/02

(54) **FUNKTIONSDREHMELDER ZUR ERZEUGUNG VON SIGNALEN MIT REDUZIERTEN OBERWELLENANTEILEN**
SYNCHRO RESOLVER FOR GENERATING SIGNALS WITH REDUCED HARMONICS PORTIONS
CAPTEUR POUR PRODUIRE DES SIGNAUX A FAIBLE TAUX D'HARMONIQUES

(30) Priorität: 29.08.1996 DE 19635040
(43) Veröffentlichungstag der Anmeldung: 11.08.1999
(73) Patentinhaber: LTN Servotechnik GmbH, 85774 Unterföhring (DE)
(72) Erfinder: PIELOK, Gerhard, D-81539 München (DE)
(86) Internationale Anmeldenummer: EP9704455
(87) Internationale Veröffentlichungsnummer: WO9809367

(56) Entgegenhaltungen:
- DE-A- 4 436 898
- US-A- 3 030 595
- US-A- 5 086 245
- LOGE H: "NEW HOLLOW-SHAFT RESOLVERS FOR SERVO APPLICATIONS" SIEMENS COMPONENTS, Bd. 27, Nr. 3, 1.Mai 1992, Seiten 19-21, XP000309721 in der Anmeldung erwähnt
- PATENT ABSTRACTS OF JAPAN vol. 010, no. 137 (E-405), 21.Mai 1986 & JP 61 001235 A (MATSUSHITA DENKI SANGYO KK), 7.Januar 1986,
- PATENT ABSTRACTS OF JAPAN vol. 012, no. 124 (E-601), 16.April 1988 & JP 62 250850 A (MATSUSHITA ELECTRIC IND CO LTD), 31.Oktober 1987,
- DATABASE WPI Section EI, Week 9318 Derwent Publications Ltd., London, GB; Class V06, AN 93-151045 XP002048571 & SU 1 737 650 A (ELEKTROPRIBOR RES INST) , 30.Mai 1992

## Beschreibung

Die Erfindung bezieht sich auf Funktionsdrehmeider, z.B. Resoiver oder Synchros, mit einer Primärwicklung und einer Sekundärwicklung, die jeweils auf einen aus mehreren miteinander verklebten Kernblechen bestehenden Wicklungskern gewickelt sind, wobei die Kernbleche jeweils mehrere Wicklungsräume mit Wicklungsöffnungen, die größer als der Durchmesser des verwendeten Wicklungsdrahtes sind. aufweisen.

Ein derartiger Funktionsdrehmelder ist aus dem Artikel von Hans Loge, "Hohlwellendrehmelder: neue Komponenten der Servotechnik" in DE-Z: Siemens Components 30 (1992) Heft 2, S.57 bis 60 bekannt.

Ein solcher Funktionsdrehmelder ist im Prinzip ein rotierender Transformator, dessen Ausgangsspannung eine eindeutige Beziehung zur Position seiner Welle hat. Funktionsdrehmelder eignen sich deshalb als absolute Winkelgeber mit einem Drehbereich von 360°.

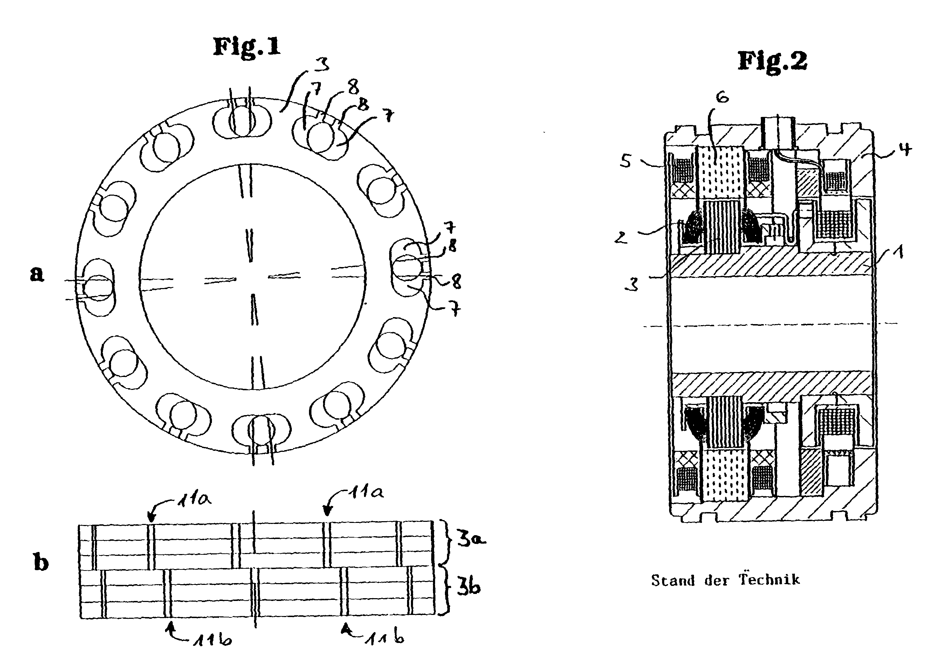

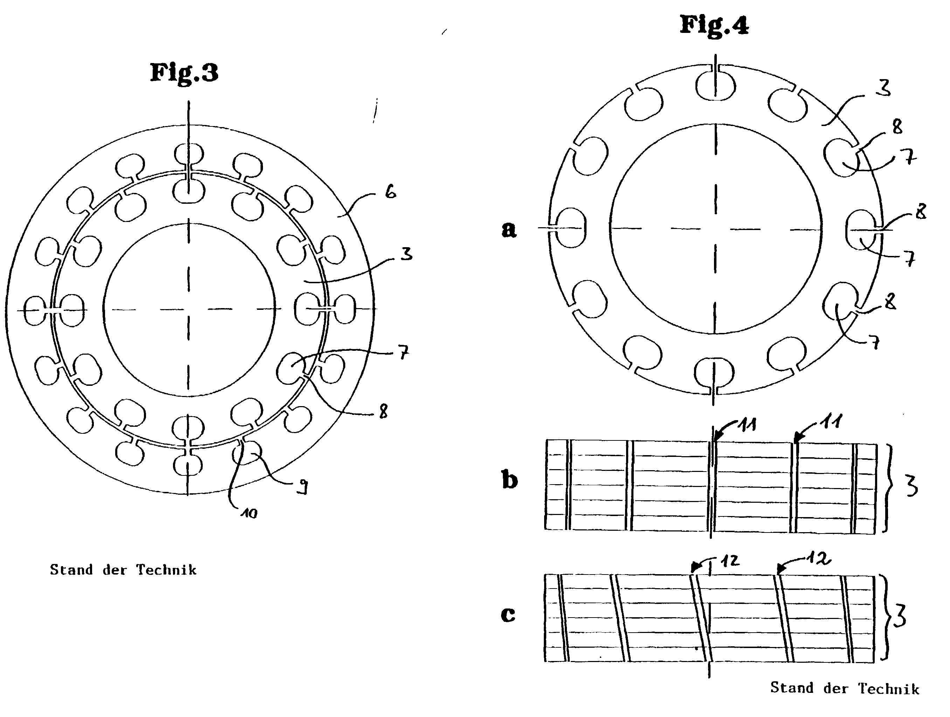

Der Aufbau eines derartigen Funktionsdrehmelders wird in der Figur 2 im Schnitt gezeigt. Der Rotor 1 weist eine Primärwicklung 2 und der Stator 4 eine Sekundärwicklung 5 auf: diese bilden den Transformator. Die Primärwicklung 2 bzw. die Sekundärwicklung 5 sind auf Kernblechpakete 3 bzw. 6 gewickelt, die in ihrer relativen Anordnung zueinander in der Vorderansicht in Figur 3 gezeigt sind. Hier sind Wicklungsöffnungen 8 mit Wicklungsräumen 7 für den Wicklungsdraht am Kernblechpaket 3 des Rotors im äußeren Kernblechbereich angeordnet und Wicklungsöffnungen 10 mit Wicklungsräumen 9 für den Wicklungsdraht am Kernblechpaket 6 des Stators im inneren Keinblechbereich.

Solche Wicklungsöffnungen mit Wicklungsräumen für den Wicklungsdraht sind gleichmäßig am Außen- bzw. Innenumfang des jeweiligen Kernblechpakets vorhanden.

Die einzelnen Kernbleche werden so zu einem Kernblechpaket verklebt, daß die sich durch eine Überlagerung der Wicklungsöffnungen ergebende gesamte Wicklungsöffnung eines Kernblechpakets gerade oder schräg vorliegt. Die einzelnen Kernbleche sind also exakt in der gleichen Position übereinander oder leicht verdreht zueinander ausgerichtet. Hierbei muß darauf geachtet werden, daß durch die verbleibende gesamte Wicklungsöffnung jeweils noch ein problemloses Einlegen des Wicklungsdrahtes in die Wicklungsräume möglich ist. Sind die Wicklungskerne für den Rotor und den Stator auf diese Weise aus mehreren Kemblechen zu einem Kernblechpaket verklebt, so wird der Wicklungsdraht anschließend von einem Automaten in die Wicklungsräume eingelegt. Eine Ansicht der exakt aufeinander gelegten und verklebten Kernbleche des Kernbiechpakets 3 des Rotors mit daraus resultierenden gesamten Wicklungsöffnungen 11 ist in der Figur 4b dargestellt. Ein Kernblechpaket 3 des Rotors mit leicht gegeneinander verdrehten Kernblechen mit daraus resultierenden schrägen gesamten Wicklungsöffnungen 12 ist in der Figur 4c dargestellt. Die Verdrehung der einzelnen Kernbleche eines Kernblechpakets kann nur soweit erfolgen. daß die gesamten Wicklungsöffnungen 12 noch ein problemloses Einlegen des Wicklungsdrahtes in die Wicklungsräume ermöglichen Daraus folgt, daß für eine stärkere Verdrehung der einzelnen Kernbleche zueinander jeweils größere Wicklungsöffnungen in den einzelnen Kernblechen vorhanden sein müssen. Dies ist wegen der ungünstigen Eigenschaften der Wicklungsöffnungen nicht erwünscht. Deshalb sind solche Funktionsdrehmelder auf einen Kompromiß zwischen der Verdrehung der einzelnen Kernbleche zueinander und den gesamten Wicklungsöffnungen auszulegen.

Zur Bestimmung der Qualität eines solchen Funktionsdrehmelders wichtige Parameter sind die Anzahl der Wicklungsöffnungen und Wicklungsräume im Kernblechpaket des Stators und des Rotors und die durch den Durchmesser des Wicklungsdrahtes vorgegebene Breite der gesamten Wicklungsöffnungen.

Die Qualität eines Funktionsdrehmelders wird durch seine Winkelabweichung und die Oberwellenanteile der von ihm erzeugten Signale bestimmt. Erwünscht sind eine möglichst geringe Winkelabweichung, sowie möglichst wenig Oberwellenanteile.

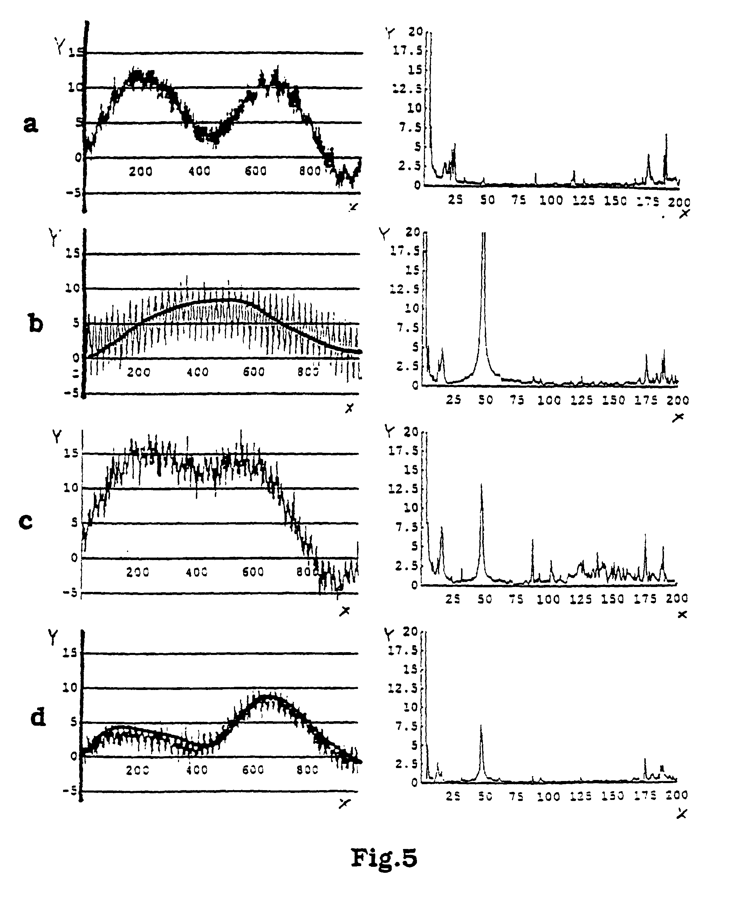

Für einen Funktionsdrehmelder. der gemäß der Figur 4b aufgebaut ist und der 24 Wicklungsöffnungen und Wicklungsräume im Kernblechpaket des Stators und 20 Wicklungsöffnungen und Wicklungsräume in dem des Rotors aufweist (ein sogenannter 24/20 Funktionsdrehmelder). sind die Winkelabweichung und die Oberwellenanteile in der Figur 5a dargestellt. Hier ist, wie in den Figuren 5b bis 5d für andere Konfigurationen. im linken Teil die Winkelabweichung mit dem Verdrehwinkel des Rotors gegenüber dem Stator auf der X-Achse und die gemessene Abweichung auf der Y-Achse dargestellt. Es kann erkannt werden, daß eine maximale Abweichung von etwa 12.5' vorhanden ist. Auf der rechten Seite dieser Abbildung sind die Oberwellenantelle mit der Nummer der Oberwelle auf der X-Achse und deren Amplitude auf der Y-Achse aufgetragen. Es kann erkannt werden. daß Oberwellenanteile nur sehr gedämpft vorhanden sind. Maximale Amplituden liegen hier deutlich unter 10 dB.

Da es erwünscht ist, in den Abmessungen kleinere Funktionsdrehmelder herzustellen. ist die zuvor angesprochene 24/20 Konfigurierung eines Funktionsdrehmelders nicht immer möglich, da für die 24 bzw. 20 Wicklungsöffnungen und Wicklungsräume der Primär- bzw. der Sekundärwicklung nicht genug Platz im entsprechenden Wicklungskern vorhanden ist. Die folgenden Ausführungen, wie auch die nachfolgende Beschreibung eines erfindungsgemäßen Ausführungsbeispiels beziehen sich auf einen 16/12 Funktionsdrehmelder, also einen Funktionsdrehmelder mit 16 Wicklungsöffnungen und Wicklungsräumen im Kernblechpaket des Stators und 12 Wicklungsöffnungen mit Wicklungsräumen in dem des Rotors

Für einen solchen Funktionsdrehmelder, dessen Kernbleche so zu einem Kernblechpaket angeordnet sind, wie es beispielhaft in der Figur 4b gezeigt ist. sind die Winkelabweichung und die Oberwellenanteile in der Figur 5b dargestellt. Es läßt sich erkennen. daß bei einer verringerten Winkelabweichung eine starke Spitze bei der 48sten Oberwelle auftritt. deren Amplitude deutlich über 20 dB liegt. Aufgrund dieser Ergebnisse kann geschlossen werden, daß eine zuverlässige Auswertung des Winkels nicht möglich ist.

Um die Amplituden der höheren Oberwellen. speziell der 48sten Oberwelle, zu reduzieren. ist es bekannt. die einzelnen Kernbleche eines Kernblechpaketes vor dem Verkleben leicht gegeneinander zu verdrehen, so wie es in der Figur 4c beispielhaft für das Kernblechpaket für eine Rotorwicklung gezeigt ist. Für ein solches Kernblechpaket ergibt sich die in der Figur 5c gezeigte Winkelabweichung mit den zugehörigen Oberwellenanteilen. Es ist deutlich zu erkennen, dass die Winkelabweichung in Spitzen über 15' liegt, jedoch die Amplitude der 48sten Oberwelle nur noch zwischen 12,5 und 15 dB. Dafür sind die Amplituden ab etwa der 80sten Oberwelle deutlich stärker als die der zuvor beschriebenen Ausführungen. Bei der Verdrehung der einzelnen Kernbleche zueinander, bevor diese zu einem Kernblechpaket verklebt werden, muß beachtet werden, daß die über alle Kernbleche verlaufende gesamte Wicklungsöffnung 12 des Kerns größer als der Durchmesser des verwendeten Wicklungsdrahtes ist, damit dieser problemlos durch eine jeweilige gesamte Wicklungsöffnung 12 in den jeweiligen Wicklungsraum gelegt werden kann. Dadurch ergeben sich im Zusammenhang mit maximal möglichen bzw. erwünschten Breiten der Wicklungsöffnungen die Grenzen der möglichen Verdrehung der einzelnen Kernbleche zueinander.

Aus Patent abstract of Japan, vol. 010, no. 137 (E-405), 21. Mai 1986, JP 61 001 235 A, ist ein Verfahren zur Herstellung eines Stators eines Motors bekannt, bei dem die einzelnen Statorbleche zuerst so ausgerichtet sind, dass Wicklungsöffnungen parallel zur Statorachse verlaufen. Nachdem die Wicklungen auf den Stator aufgebracht worden sind, werden die Statorbleche verdreht.

Weiterhin ist aus Derwent Publication, XP 00 2048 571, SU-A-173760 ein Stator bekannt, bei dem Blechpakete gegeneinander unter einem Winkel von 45° verdreht sind.

Der Erfindung liegt die Aufgabe zugrunde, den magnetischen Fluss eines Funktionsdrehmelders mit verringerten Schwankungen zu erzeugen und auf diese Weise einen Funktionsdrehmelder zu erhalten, dessen Signale oberwellenarm sind.

Diese Aufgabe wird erfindungsgemäß durch einen Funktionsdrehmelder gelöst, der eine Primärwicklung und eine Sekundärwicklung aufweist, die jeweils auf einen aus mehreren miteinander verklebten Kernblechen bestehenden Wicklungskern gewickelt sind, wobei die Kernbleche jeweils mehrere Wicklungsräume mit Wicklungsöffnungen aufweisen, die größer als der Durchmesser des verwendeten Wicklungsdrahtes sind, der dadurch gekennzeichnet ist, daß die einzelnen miteinander verklebten Kernbleche für den Kern der Primärwicklung und/oder der Sekundärwicklung soweit gegeneinander verdreht sind, daß die verbleibende jeweilige gesamte Wicklungsöffnung des jeweiligen Kerns kleiner als der Durchmesser des verwendeten Wicklungsdrahtes ist.

Weiter wird diese Aufgabe erfindungsgemäß durch einen Funktionsdrehmelder gelöst, der eine Primärwicklung und eine Sekundärwicklung aufweist, die jeweils auf einen aus mehreren miteinander verklebten Kernblechen bestehenden Wicklungskern gewickelt sind, wobei die Kernbleche jeweils mehrere Wicklungsräume mit Wicklungsöffnungen aufweisen, die größer als der Durchmesser des verwendeten Wicklungsdrahtes sind, der dadurch gekennzeichnet ist, daß eine jeweilige gesamte Wicklungsöffnung eines aus mehreren Kernblechen bestehenden Kernblechpakets für den Kern der Primärwicklung und/oder der Sekundärwicklung soweit gegen eine jeweilige gesamte Wicklungsöffnung eines weiteren Kernblechpakets für den jeweiligen Kern verdreht ist, daß die verbleibende jeweilige gesamte Wicklungsöffnung des jeweiligen Kerns kleiner als der Durchmesser des verwendeten Wicklungsdrahtes ist.

Eine solche Primärwicklung oder Sekundärwicklung wird nach einem erfindungsgemäßen Verfahren hergestellt, indem
der Kern der jeweiligen Wicklung bei dem Wickelvorgang aus wenigstens zwei Kernblechpaketen besteht, die so ausgerichtet sind. daß ein automatischer Wickelvorgang durch die jeweiligen Wicklungsöffnungen ausgeführt werden kann:
die jeweiligen Kernblechpakete bei dem Wickelvorgang durch einen Abstandshalter voneinander beabstandet gehalten werden:
nach dem Wickelvorgang der jeweilige Abstandshalter entfernt wird: und
die nunmehr lose gegeneinander verdrehbaren Kernblechpakete so gegeneinander verdreht und anschließend miteinander verklebt werden. daß eine verbleibende jeweilige gesamte Wicklungsöffnung des jeweiligen Kerns kleiner als der Durchmesser des verwendeten Wicklungsdrahtes ist.

Durch diese erfindungsgemäße Wicklung der Primär- und/oder Sekundärwicklung auf Kernbleche oder Teilpakete, die sich zueinander im Abstand befinden. stehen die Kernbleche oder Teilpakete nach dem Wickelvorgang und dem Entfernen des/der Abstandshalter lose zueinander. Sie werden nur von der Drahtwicklung, welche in den Wicklungsräumen liegt. gehalten. In diesem Stadium liegt noch kein fertiger aus einem Kemblechpaket bestehender Wicklungskem vor. Die einzelnen Kembleche oder Teilpakete. die noch lose zueinander stehen. können nun abhängig von dem vor dem Wickeln gewählten Abstand der einzelnen Kernbleche oder Teilpakete zueinander verdreht werden. bevor sie miteinander verklebt werden. Eine solche Verdrehung ist nicht mehr von dem Durchmesser des Wicklungsdrahtes abhängig, deshalb können die einzelnen Kernbleche oder Teilpakete auch soweit gegeneinander verdreht werden. daß eine über alle Kernbleche verlaufende gesamte Wicklungsöffnung eines Kerns gar nicht mehr vorhanden ist. Diese wird in diesem Stadium auch nicht mehr benötigt. da der Wickelvorgang schon abgeschlossen ist.

Durch auf diese Weise aufgebaute Wicklungskerne können die WicklungsÖffnungen soweit überlappen, daß ein schwankungsreduzierter magnetischer Fluß erreicht wird, ohne daß auf eine rationelle maschinelle Wickelmethode verzichtet werden muß. Weiter entsteht dadurch eine deutlich oberwellenreduzierte Signalerzeugung. Dieser schwankungsreduzierte magnetische Fluß und die oberwellenreduzierte Signalerzeugung beruht neben dem möglichen Überlappen der Wicklungsöffnungen weiter darauf, daß die Wicklungsöffnungen der einzelnen Kernbleche fast bis zur Wicklungsdrahtstärke reduziert werden können. So wird es auch möglich. mit einer geringeren Anzahl von Wicklungsräumen am Umfang der Kernbleche auszukommen.

Weiter können einfachere Stanzwerkzeuge für die Kernblechherstellung verwendet werden und die Anzahl der Kernbleche kann reduziert werden.

Die Erfindung und vorteilhafte Einzelheiten werden nachfolgend unter Bezug auf die Zeichnung in einer beispielweisen Ausführungsform näher erläutert. Es zeigen:
**Fig. 1** eine erfindungsgemäße Ausführungsform eines Kernblechpakets für den Rotor eines Funktionsdrehmelders. wie es nach dem Wickelvorgang vorliegen kann;
**Fig. 2** eine Schnittdarstellung des Aufbaus eines Funktionsdrehmelders;
**Fig. 3** die Vorderansicht eines Rotorkernblechpakets und eines Statorkernblechpakets;
**Fig. 4a. 4b** und **4c** die Vorderansicht eines Rotorkernblechpakets und die Seitenansichten des aus mehreren Kernblechen verklebten Rotorkernblechpakets. wenn die einzelnen Kernbleche exakt übereinander ausgerichtet und leicht gegeneinander verschoben sind;
**Fig. 5a** die Winkelabweichung eines 24/20 Funktionsdrehmelders und dessen Oberwellenanteile:
**Flg. 5b** die Winkelabweichung eines 16/12 Funktionsdrehmelders mit exakt aufeinanderliegenden Kernblechen und dessen Oberwellenanteile:
**Fig. 5c** die Winkelabweichung eines 16/12 Funktionsdrehmelders mit gegeneinander verdrehten Kernblechen und dessen Oberwellenanteile; und
**Fig. 5d** die Winkelabweichung eines erfindungsgemäßen 16/12 Funktionsdrehmelders und dessen Obenvellenanteile.

Ein beispielhaftes Rotorkernblechpaket des effindungsgemäßen Funktionsdrehmelders ist in der Figur 1 dargestellt. Hier besteht das Kernblechpaket 3 aus zwei Teilpaketen 3a und 3b. die jeweils gesamte Wicklungsöffnungen 11a und 11b aufweisen, die nur etwas größer als der Durchmesser des Wicklungsdrahtes sind. Während des Wickelvorgangs sind diese beiden Teilpakete durch einen Abstandshalter voneinander beabstandet so ausgerichtet. daß nicht auf eine rationelle maschinelle Wickeimethode verzichtet werden muß. Nachdem der Wickelvorgang abgeschlossen ist. werden die beiden Teilpakete 3a und 3b und der Abstandshalter von der Drahtwicklung 2 festgehalten. Wird der Abstandshalter zwischen den beiden Teilpaketen 3a und 3b entfernt, so stehen diese lose zueinander. wobei sie weiter von der Drahtwicklung 2 gehalten werden. Abhängig von dem gewählten Abstand können die beiden Teilpakete 3a und 3b mit ihren jeweiligen gesamten Wicklungsöffnungen 11a und 11b so gegeneinander verdreht werden. daß eine jeweilige über alle Kernbleche verlaufende gesamte Wicklungsöffnung des Kerns kleiner als der Durchmesser des verwendeten Wicklungsdrahtes oder gar nicht mehr vorhanden ist. Je breiter der beim Wickelvorgang vorhandene Abstand zwischen den Teilpaketen 3a und 3b ist. desto weiter können sie gegeneinander verdreht werden.

Diese Verdrehung der Kernblechpakete zueinander geschieht während des Klebevorgangs, durch den die beiden Kernblechpakete miteinander verklebt werden. Auf diese Weise entsteht ein zusammenhängender Kern 3. der keine gesamten Wicklungsöffnungen aufweisen muß. die von der Größe des Durchmessers des Wicklungsdrahtes abhängig sind.

Die Winkelabweichung und die Oberwellenanteile eines so nach der Erfindung aufgebauten Funktionsdrehmelders sind in der Figur 5d dargestellt. Es kann deutlich erkannt werden, daß in der Winkelabweichung 10' nicht überschritten werden und die Amplituden der Oberwellenanteile stark reduziert sind, wobei die Amplitude der 48sten Oberwelle zusätzlich unter 10 dB liegt.

## Patentansprüche

1. Funktionsdrehmelder, mit einer Primärwicklung (2) und einer Sekundärwicklung (5), die jeweils auf einen aus mehreren miteinander verklebten Kernblechen bestehenden Wicklungskern (3, 6) gewickelt sind, wobei die Kernbleche jeweils mehrere Wicklungsräume (7, 9) mit Wicklungsöffnungen (8, 10). die größer als der Durchmesser des verwendeten Wicklungsdrahtes sind. aufweisen, **dadurch gekennzeichnet, daß** die einzelnen miteinander verklebten Kernbleche für den Kern (3, 6) der Primärwicklung (2) und/oder der Sekundärwicklung (5) soweit gegeneinander verdreht sind, daß die verbleibende jeweilige gesamte Wicklungsöffnung (11, 12) des jeweiligen Kerns (3, 6) kleiner als der Durchmesser des verwendeten Wicklungsdrahtes ist.

2. Funktionsdrehmelder, mit einer Primärwicklung (2) und einer Sekundärwicklung (5). die jeweils auf einen aus mehreren miteinander verklebten Kernblechen bestehenden Wicklungskern (3. 6) gewickelt sind, wobei die Kernbleche jeweils mehrere Wicklungsräume (7, 9) mit Wicklungsöffnungen (8, 10), die größer als der Durchmesser des verwendeten Wicklungsdrahtes sind. aufweisen, **dadurch gekennzeichnet, daß** eine jeweilige gesamte Wicklungsöffnung (11a) eines aus mehreren Kernblechen bestehenden Kernblechpakets (3a) für den Kern (3, 6) der Primärwicklung (2) und/oder der Sekundärwicklung (5) soweit gegen eine jeweilige gesamte Wicklungsöffnung (11b) eines weiteren Kernblechpakets (3b) für den jeweiligen Kern (3, 6) verdreht ist, daß die verbleibende jeweilige gesamte Wicklungsöffnung (11, 12) des jeweiligen Kerns kleiner als der Durchmesser des verwendeten Wicklungsdrahtes ist.

3. Verfahren, einen Kern für eine Primärwicklung (2) oder eine Sekundärwicklung (5) nach einem der Ansprüche 1 oder 2 herzustellen, wobei der Kern (3, 6) der jeweiligen Wicklung (2, 5) bei dem Wickelvorgang aus wenigstens zwei Kernblechpaketen (3a, 3b) besteht, die so ausgerichtet sind, dass ein automatischer Wickelvorgang durch die jeweiligen Wicklungsöffnungen (8, 10) ausgeführt werden kann; und die jeweiligen Kernblechpakete (3a, 3b) bei dem Wickelvorgang durch einen Abstandshalter voneinander beabstandet gehalten werden, **dadurch gekennzeichnet, daß** nach dem Wickelvorgang der jeweilige Abstandshalter entfernt wird; und die nunmehr lose gegeneinander verdrehbaren Kernblechpakete (3a, 3b) so gegeneinander verdreht und anschließend miteinander verklebt werden, daß eine verbleibende jeweilige gesamte Wicklungsöffnung (11, 12) des jeweiligen Kerns kleiner als der Durchmesser des verwendeten Wicklungsdrahtes ist.

4. Verfahren nach Anspruch 3, **dadurch gekennzeichnet, daß** der maximal erreichbare Verdrehwinkel der einzelnen Kernblechpakete (3a, 3b) gegeneinander durch ihren beim Wickelvorgang mittels des Abstandshalters eingestellten Abstand zueinander bestimmt ist.

5. Verfahren nach Anspruch 3 oder 4, **dadurch gekennzeichnet, daß** ein Kernblechpaket (3a, 3b) aus einem oder mehreren Kernblechen bestehen kann.

## Claims

1. A synchro resolver with a primary winding (2) and a secondary winding (5), which are each wound on a winding core (3, 6) consisting of a plurality of core laminations bonded together, wherein the core laminations each comprise a plurality of winding spaces (7, 9) with winding mouths (8, 10) which are larger than the diameter of the winding wire employed, **characterized in that** the individual core laminations bonded together for the core (3, 5) of the primary winding (2) and/or of the secondary winding (5) are turned relative to one another to such an extent that the remaining respective overall winding mouth (11, 12) of the core (3, 5) in question is smaller than the diameter of the winding wire employed.

2. A synchro resolver with a primary winding (2) and a secondary winding (5), which are each wound on a winding core (3, 6) consisting of a plurality of core laminations bonded together, wherein the core laminations each comprise a plurality of winding spaces (7, 9) with winding mouths (8, 10) which are larger than the diameter of the winding wire employed, **characterized in that** a respective overall winding mouth (11a) of one core lamination pack (3a) consisting of one or more core laminations, for the core (3, 6) of the primary winding (2) and/or of the secondary winding (5) is turned relative to a respective overall winding mouth (11b) of a further core lamination pack (3b) for the core (3, 6) in question to such an extent that the remaining respective overall winding mouth (11, 12) of the core in question is smaller than the diameter of the winding wire employed.

3. A method of making a core for a primary winding (2) or a secondary winding (5) according to either claim 1 or 2, wherein the core (3, 6) of the winding (2, 5) in question consists in the winding operation of at least two core lamination packs (3a, 3b), which are so aligned that an automatic winding operation can be effected through the respective winding mouths (8, 10) and the core lamination packs (3a, 3b) in question are held spaced from one another by a spacer during the winding operation, **characterized in that**, after the winding operation, the spacer in question is removed and the core lamination packs (3a, 3b) now free to rotate relative to one another are so turned relative to one another and then bonded together that a remaining respective overall winding mouth (11, 12) of the core in question is smaller than the diameter of the winding wire employed.

4. A method according to claim 3, **characterized in that** the maximum angle of turning of the individual core lamination packs (3a, 3b) relative to one another is determined by their spacing from one another established in the winding operation by means of the spacer.

5. A method according to claim 3 or 4, **characterized in that** a core lamination pack (3a, 3b) can consist of one or more core laminations.

## Revendications

1. Synchro-décomposeur comportant un enroulement primaire (2) et un enroulement secondaire (5) qui sont bobinés chacun sur un noyau (3, 6) formé de plusieurs tôles de noyau assemblées par collage, les tôles de noyau présentant chacune plusieurs logements d'enroulement (7, 9) avec des ouvertures (8, 10) de dimensions supérieures au diamètre du fil d'enroulement utilisé, **caractérisé en ce que** les tôles de noyau collées les unes aux autres pour le noyau (3 ,6) de l'enroulement primaire (2) et/ou de l'enroulement secondaire (5) sont décalées angulairement les unes par rapport aux autres, de telle sorte que l'ouverture d'enroulement (11, 12) totale restante du noyau (3, 6) concerné soit inférieure au diamètre du fil d'enroulement utilisé.

2. Synchro-décomposeur comportant un enroulement primaire (2) et un enroulement secondaire (5) qui sont bobinés chacun sur un noyau (3, 6) formé de plusieurs tôles de noyau assemblées par collage, les tôles de noyau présentant chacune plusieurs logements d'enroulement (7, 9) avec des ouvertures (8, 10) de dimensions supérieures au diamètre du fil d'enroulement utilisé, **caractérisé en ce qu'**une ouverture d'enroulement (11a) totale d'un paquet (3a) donné de tôles de noyau, formé de plusieurs tôles de noyau pour le noyau (3, 6) de l'enroulement primaire (2) et/ou de l'enroulement secondaire (5), est décalée angulairement par rapport à une ouverture d'enroulement (11b) totale d'un autre paquet donné de tôles de noyau (3b) pour le noyau (3, 6) concerné de telle sorte que l'ouverture d'enroulement (11, 12) totale restante du noyau (3, 6) concerné soit inférieure au diamètre du fil d'enroulement utilisé.

3. Procédé de fabrication d'un noyau pour un enroulement primaire (2) ou un enroulement secondaire (5) selon une des revendications 1 ou 2, le noyau (3, 6) de l'enroulement (2, 5) concerné, dans le processus de bobinage, étant formé d'au moins deux paquets (3a, 3b) de tôles de noyau qui sont agencés de manière à permettre un bobinage automatique à travers les ouvertures d'enroulement (8, 10) concernées, et les paquets (3a, 3b) de tôles de noyau concernés étant maintenus éloignés l'un de l'autre par une entretoise, **caractérisé en ce que**, après le bobinage, on retire l'entretoise et on tourne l'un par rapport à l'autre les paquets (3a ,3b) de tôles de noyau désormais libres en rotation, de manière telle qu'une ouverture d'enroulement (11, 12) totale restante du noyau concerné soit inférieure au diamètre du fil d'enroulement utilisé.

4. Procédé selon la revendication 3, **caractérisé en ce que** l'angle de rotation maximal possible des différents paquets (3a, 3b) de tôles de noyau est déterminé par l'écartement de ceux-ci réglé à l'aide de l'entretoise lors du bobinage.

5. Procédé selon la revendication 3 ou 4, **caractérisé en ce qu'**un paquet (3a ,3b) de tôles de noyau peut être formé d'une ou de plusieurs tôles de noyau.
